# EUROPÄISCHE PATENTSCHRIFT

(11) **EP 0 511 519 B1**
(45) Veröffentlichungstag und Bekanntmachung des Hinweises auf die Patenterteilung: **20.07.1994**
(21) Anmeldenummer: 92105860.8
(22) Anmeldetag: 04.04.1992
(51) Int. Cl.: C04B 35/66, C04B 35/68

(54) **Verfahren zur Herstellung eines benzo(a)pyrenfreien, kohlenstoffhaltigen, feuerfesten keramischen Werkstoffs**
Process for production of a benzopyrene free carbonaceous refractory ceramic body
Procédé de production de corps céramique réfractaire en matériau carboné, exempt de benzopyrène

(30) Priorität: 01.05.1991 DE 4114210
(43) Veröffentlichungstag der Anmeldung: 04.11.1992
(73) Patentinhaber: Veitsch-Radex Aktiengesellschaft für feuerfeste Erzeugnisse, A-1040 Wien (AT)
(72) Erfinder: Kloss, Gunnar, Dipl.-Ing., W-5403 Mülheim-Kärlich (DE); Weber, Achim, Dipl.-Ing., W-5100 Aachen (DE); Epstein, Bernd, Dipl.-Ing., W-5411 Kadenbach (DE)
(74) Vertreter: Becker, Thomas, Dr., Dipl.-Ing.

(56) Entgegenhaltungen:
- DE-A- 3 211 056
- DE-A- 3 620 473

## Beschreibung

Die Erfindung betrifft ein Verfahren zur Herstellung eines benzo(a)pyrenfreien, kohlenstoffhaltigen, feuerfesten keramischen Werkstoffs, der anschließend zur Herstellung von keramischen Formteilen verwendet werden kann.

Die Imprägnierung von feuerfesten Werkstoffen und Formteilen mit Steinkohlenprodukten wie Teer oder Pech ist seit langem bekannt. Sie dient in erster Linie der Erhöhung der Infiltrationsbeständigkeit beziehungsweise Beständigkeit gegenüber aggressiven Schlacken der entsprechenden feuerfesten keramischen Produkte. Zur Imprägnierung wird das Imprägniermedium über dessen Schmelzpunkt hinaus mit Hilfe einer Heizvorrichtung auf eine bestimmte Viskosität eingestellt, um das Porensystem anschließend effektiv über ein Vakuum-/Druck-Verfahren mit Pech oder Teer zu füllen.

Dabei finden insbesondere Steinkohlenteerpeche, zum Teil in Kombination mit härtbaren Kunstharzen, Anwendung. Die genannten Imprägnierungsstoffe sind jedoch wegen ihres relativ hohen Gehalts an polyzyklischen Aromaten als gesundheitsgefährdend einzustufen. Dies gilt insbesondere für das im Steinkohlenteer oder -pech enthaltene Benzo(a)pyren, das als Prototyp der polyzyklischen aromatischen Kohlenwasserstoffe angesehen wird. Untersuchungen haben belegt, daß dieses Carcinogen krebserregend ist.

Es wird deshalb heute zunehmend dazu übergegangen, anstelle von Pech oder Teer ausschließlich Kunstharze als Bindemittel einzusetzen. Hierdurch entfällt zwar das Problem der polyzyklischen Aromaten. Allerdings ist der aus Kunstharzen entstehende Kohlenstoffrückstand aus strukturellen Gründen weniger oxidationsbeständig als der aus Pech oder Teer gebildete Koks. Dies hat ein schlechteres Verschleißverhalten kunstharzgebundener, kohlenstoffhaltiger feuerfester Werkstoffe zur Folge. Ein weiterer Nachteil von Kunstharzen ist ihr hoher Preis.

Durch die Verwendung von Bitumen als Bindemittel ließen sich zwar ebenfalls benzo(a)pyrenfreie keramische Werkstoffe herstellen. Nachteilig dabei ist jedoch, daß geeignete Bitumen erst bei Temperaturen deutlich über denen von Pech oder Teer eine ausreichend niedrige Viskosität entwickeln, um das Bindemittel homogen mit dem keramischen Matrixmaterial zu vermischen und die einzelnen Körner zu benetzen. Während Steinkohlenteerpech bei 150° C eine Viskosität von circa 3,0 Pas entwickelt, liegt die Viskosität eines Bitumens bei dieser Temperatur sehr viel höher. Um ähnlich niedrige Viskositätswerte wie bei Verwendung von Steinkohlenteerpech zu erreichen, wäre es deshalb notwendig, das Bitumen auf Temperaturen von über 250° C zu erwärmen.

Der Erfindung liegt insoweit die Aufgabe zugrunde, ein Verfahren zur Herstellung eines kohlenstoffhaltigen, feuerfesten keramischen Werkstoffs anzubieten, der weitestgehend benzo(a)pyrenfrei ist und eine Aufbereitung bei möglichst geringen Temperaturen, die vorzugsweise nicht höher liegen sollten als bei Verwendung von Steinkohlenteerpech, ermöglicht.

Der Erfindung liegt die Erkenntnis zugrunde, daß die Viskosität von Bitumen im Temperaturintervall von 170 bis 300° C deutlich herabgesetzt werden kann, wenn das Bitumen in Kombination mit einem Kunstharz, insbesondere einem Novolakharz, eingesetzt wird.

Um die gewünschte Viskositätserniedrigung in vollem Umfang ausschöpfen zu können, wurde weiter erkannt, daß auf jede Art eines Härters verzichtet werden sollte, da derartige Härter schon bei Temperaturen von circa 180° C wieder viskositätserhöhend (ansteifend) wirken.

In seiner allgemeinsten Ausführungsform umfaßt das Verfahren zur Herstellung eines benzo(a)pyrenfreien, kohlenstoffhaltigen, feuerfesten keramischen Werkstoffes folgende Schritte:
- ein gekörntes, keramisches Matrixmaterial wird zunächst auf eine Temperatur zwischen 170 und 300° C erwärmt,
- danach werden 0,1 bis 5 Massen-% eines pulverförmigen Kunstharzes mit dem keramischen Matrixmaterial vermischt,
- anschließend werden 0,1 bis 5 Massen-% eines auf 150 bis 220° C erwärmten Bitumens in flüssiger Konsistenz der so hergestellten Zumischung beigemischt,

wobei alle Komponenten in möglichst homogener Verteilung vorliegen sollten, um bei der späteren Formgebung ein homogenes Gefüge zu ermöglichen. Eine alternative Ausführungsform mit einem Kunstharz/Bitumen-Gemisch beschreibt Anspruch 2.

Die vorstehenden Mengenangaben für das Kunstharz und das Bitumen beziehen sich jeweils auf die Gesamtmischung.

Wie dargestellt wird durch die Kombination von Kunstharz und Bitumen eine deutliche Viskositätserniedrigung des Bitumens erreicht, so daß schon bei Temperaturen zwischen 170 und 240° C das Bitumen so flüssig ist, daß es sich homogen zumischen läßt, wobei gleichzeitig ein weiterer Vorteil, nämlich eine verbesserte Benetzung der feuerfesten Teilchen mit der Kunstharz-/Bitumen-Mischung beobachtet werden kann.

Das Bitumen-Kunstharz-Gemisch zeichnet sich durch hohe Adhäsionskräfte aus, was beim anschließenden Formgebungsverfahren die Gefahr einer Preßlagenbildung verhindert.

Der nach dem beschriebenen Verfahren hergestellte Werkstoff ist im Sinne gesetzlicher Auflagen benzo(a)pyrenfrei. In Versuchen wurde ein Benzo(a)pyren-Gehalt, eingebracht durch das Bitumen, von unter 0,5 mg/kg festgestellt. Insoweit ist der Werkstoff deutlich weniger umweltgefährdend und weniger gesundheitsschädlich als ein mit Pech oder Teer gebundenes Material.

Als besonders vorteilhaft hat sich die Verwendung von Phenolharz, und hier insbesondere von Novolakharz herausgestellt. Das Harz zeichnet sich durch eine Fließstrecke kleiner 150 mm aus.

Der aus dem Bitumen bei einer Verkokung entstehende Restkohlenstoff weist eine vorwiegend lineare Struktur auf. Durch die Zugabe des Kunstharzes, der sich bei Temperaturen oberhalb circa 150° C im Bitumen löst, wird bei einer Verkokung ein für die Bindung des feuerfesten Matrixmaterials wesentliches Kohlenstoffgerüst gebildet, welches räumlich vernetzte Strukturen aufweist. Folglich sind die Festigkeit und Verschleißbeständigkeit eines unter Verwendung eines Kunstharz-/Bitumen-Bindemittels hergestellten Werkstoffes deutlich besser als die Festigkeit und Verschleißbeständigkeit eines ausschließlich mit Bitumen gebundenen kohlenstoffhaltigen Feuerfestwerkstoffs.

Zur weiteren Optimierung des Kohlenstoffgerüstes wird vorgeschlagen, ein Bitumen mit einem Verkokungsrückstand nach Conradsen von über 35 Massen-%, vorzugsweise über 45 Massen-% zu verwenden. Auf diese Weise wird eine höhere Kohlenstoffausbeute erreicht, die mit der Kohlenstoffausbeute vergleichbar ist, die zum Beispiel mit Steinkohlenteerpech erreicht wird (circa 45 Massen-%).

Auch die Verwendung eines Harzes mit kurzer Fließstrecke (vorzugsweise < 30 mm) fördert die Ausbeute an Kohlenstoff nach einer Verkokung und verbessert die Verschleißbeständigkeit des Werkstoffes insgesamt.

Der Harzanteil innerhalb der Gesamtmenge Harz/Bitumen kann 1 bis 50 %, vorzugsweise 10 bis 30 % betragen. Die Gesamtmenge Harz/Bitumen beträgt in der Regel 2 bis 7 Massen-%, vorzugsweise 2,5 bis 3,5 Massen-%, jeweils bezogen auf die Gesamtmischung.

Weitere vorteilhafte Ausführungsvarianten sind:
- Zugabe des Kunstharzes in einer Menge zwischen 0,1 bis 2,0 Massen-%.
- Zugabe des Bitumens in einer Menge von 2,0 bis 3,0 Massen-%.
- Zugabe einer Mehlkomponente (< 100 µm) des feuerfesten Matrixmaterials zu der Mischung, vorzugsweise nachdem das Bitumen untergemischt wurde. Auf diese Weise kann eine höhere Packungsdichte bei der späteren Formgebung erreicht werden. Zusammen mit einer entsprechend hohen Kohlenstoffausbeute wird hierdurch ein späterer Abbrand bei der Temperung und/oder dem Brennen beziehungsweise bei der Anwendung reduziert.
   Die Mehlkomponente kann dabei in einer Menge bis zu 30 Massen-%, vorzugsweise bis zu 25 Massen-%, zugegeben werden.
- Ebenso kann eine feste kohlenstoffhaltige Komponente zum Beispiel in Form von Ruß, Koks und/oder Graphit der Mischung zugegeben werden. Vorzugsweise sollte auch dies wiederum nach der Vermischung mit dem Bitumen erfolgen. Dieser Kohlenstoffträger wirkt zusätzlich verschleißhemmend. In bezug auf die Schlackenbeständigkeit werden die Eigenschaften des Werkstoffs weiter verbessert. Bevorzugte Zugabemengen sind:
   - Ruß: bis 3,0 Massen-%
   - Graphit: bis 10,0 Massen-%
- Auch die Zugabe von elementarem Schwefel in Massenanteilen zwischen 0,1 und 3 % hat sich als vorteilhaft herausgestellt, da der Schwefel viskositätserniedrigend wirkt und die Kohlenstoffausbeute ebenfalls erhöht. Außerdem wirkt der Schwefel als Vernetzungsmittel.
- Das keramische Matrixmaterial kann jedes gängige keramische Material sein, das mit Kohlenstoff gebunden wird. Bevorzugt ist die Verwendung von Magnesit in einer Körnung bis 6 mm.

Die Erfindung wird nachstehend anhand eines Ausführungsbeispieles näher erläutert. (Zugabemengen jeweils auf das Matrixmaterial bezogen).

Ein magnesitisches Matrixmaterial (ohne Mehlkornanteil) in einer Körnung bis 6 mm wird auf 250° C erwärmt.

Danach werden 1,0 Massen-% Novolakharz (ohne Härter) mit einer Fließstrecke kleiner 100 mm untergemischt.

Anschließend werden 3,0 Massen-% eines auf 210° C vorerhitzten Bitumens mit einem Verkokungsrückstand über 45 % zugemischt.

Schließlich werden die eingangs abgetrennte Mehlkomponente des Matrixmaterials, 3,0 Massen-% Ruß und 1,0 Massen-% elementarer Schwefel zugegeben.

Alle Komponenten werden homogen vermischt. Die Masse wird danach zu Formteilen (Steinen) verarbeitet, und die Steine werden bei 300° C getempert.

Die so hergestellten Magnesitsteine weisen folgende Eigenschaften auf:
- Rohdichte:: > 3,06 g/cm³
- offene Porosität:: < 7,0 %
- Kaltdruckfestigkeit:: > 40 MPa
- Warmdruckfestigkeit:: > 20 MPa

## Patentansprüche

1. Verfahren zur Herstellung eines benzo(a)pyrenfreien, kohlenstoffhaltigen, feuerfesten keramischen Werkstoffs mit folgenden Schritten:
1.1 ein gekörntes keramisches Matrixmaterial wird auf eine Temperatur zwischen 170 und 300° C erwärmt,
1.2 danach werden 0,1 bis 5,0 Massen-%, bezogen auf die Gesamtmischung, eines pulverförmigen Kunstharzes und 0,1 bis 5,0 Massen-%, bezogen auf die Gesamtmischung, eines auf 150 bis 220° C erwärmten Bitumens in viskoser Konsistenz nacheinander oder als ein auf 150 bis 220° C erwärmtes Gemisch unter das keramische Matrixmaterial gemischt.

2. Verfahren nach Anspruch 1 mit der Maßgabe, daß als Kunstharz ein Phenolharz eingesetzt wird.

3. Verfahren nach Anspruch 2 mit der Maßgabe, daß als Phenolharz ein Novolakharz eingesetzt wird.

4. Verfahren nach einem der Ansprüche 1 bis 3 mit der Maßgabe, daß ein Kunstharz eingesetzt wird, das keinen Härter enthält.

5. Verfahren nach einem der Ansprüche 1 bis 4 mit der Maßgabe, daß 0,1 bis 2,0 Massen-% des Kunstharzes zugemischt werden.

6. Verfahren nach einem der Ansprüche 1 bis 5 mit der Maßgabe, daß 2,0 bis 3,0 Massen-% des Bitumens zugemischt werden.

7. Verfahren nach einem der Ansprüche 1 bis 6 mit der Maßgabe, daß ein Bitumen mit einem Verkokungsrückstand nach Conradsen von über 35 Massen-% eingesetzt wird.

8. Verfahren nach Anspruch 7 mit der Maßgabe, daß ein Bitumen mit einem Verkokungsrückstand nach Conradsen von über 45 Massen-% eingesetzt wird.

9. Verfahren nach einem der Ansprüche 1 bis 8 mit der Maßgabe, daß der Mischung nach Zugabe des Bitumens eine Mehlkomponente (< 100 µm) des keramischen Matrixmaterials homogen zugemischt wird.

10. Verfahren nach einem der Ansprüche 1 bis 9 mit der Maßgabe, daß der Mischung eine feste, kohlenstoffhaltige Komponente in Form von fluß, Koks und/oder Graphit zugemischt wird.

11. Verfahren nach Anspruch 10 mit der Maßgabe, daß die Rußkomponente in einer Menge bis 3 Massen-% zugegeben wird.

12. Verfahren nach Anspruch 10 oder 11 mit der Maßgabe, daß der Mischung Graphit in einer Menge bis zu 20 Massen-% zugemischt wird.

13. Verfahren nach einem der Ansprüche 1 bis 12 mit der Maßgabe, daß der Mischung elementarer Schwefel in einer Menge zwischen 0,1 und 3 Massen-% zugemischt wird.

14. Verfahren nach einem der Ansprüche 1 bis 13 mit der Maßgabe, daß die Bitumenzugabe in zwei Teilmengen erfolgt und zwischen der Zugabe der ersten und der zweiten Teilmenge des Bitumens eine Mehlkomponente (< 100 µm) des keramischen Matrixmaterials, die feste kohlenstoffhaltige Komponente und/oder weitere Zuschlagstoffe zugemischt wird.

15. Verfahren nach einem der Ansprüche 1 bis 14 mit der Maßgabe, daß als keramisches Matrixmaterial Magnesit in einer Körnung bis 6 mm eingesetzt wird.

16. Verfahren nach einem der Ansprüche 1 bis 14, bei dem die Mischung aus feuerfestem Matrixmaterial Kunstharz und Bitumen sowie gegebenenfalls weiteren Zusätzen anschließend zu Formteilen verarbeitet wird.

17. Verfahren nach Anspruch 16 mit der Maßgabe, daß die Formteile danach getempert werden.

18. Verfahren nach Anspruch 17 mit der Maßgabe, daß die Temperung bei Temperaturen zwischen 300 und 350° C durchgeführt wird.

## Claims

1. Process for preparing a benzo(a)pyrene-free, carbon-containing, refractory ceramic material, comprising the following steps:
1.1 a granular ceramic matrix material is heated to a temperature of between 170°C and 300°C,
1.2 after which 0.1 to 5.0 mass % (relative to the total mixture) of a powdered synthetic resin and 0.1 to 5.0 mass % (relative to the total mixture) of a bitumen of viscous consistency, preheated to 150-220°C are added subsequently or as a mixture, preheated to 150-220°C, to the ceramic matrix material.

2. Process in accordance with claim 1 providing that a phenolic resin is used as the synthetic resin.

3. Process in accordance with claim 2, providing that a novolak resin is used as the phenolic resin.

4. Process in accordance with one of claims 1 to 3 providing that a synthetic resin containing no curing agent is used.

5. Process in accordance with one of claims 1 to 4, providing that 0.1-2.0 mass % of said synthetic resin is added.

6. Process in accordance with one of claims 1 to 5, providing that 2.0-3.0 mass % of said bitumen is added.

7. Process in accordance with one of claims 1 to 6 providing that a bitumen with a Conradsen coking residue above 35 mass % is used.

8. Process in accordance with claim 7, providing that a bitumen with a Conradsen coking residue above 45 mass % is used.

9. Process in accordance with one of claims 1 to 8, providing that after addition of the bitumen, a very fine component (< 100 microns) of the ceramic matrix material is homogeneously added to the mixture.

10. Process in accordance with one of claims 1 to 9, providing that a solid, carbon-containing component in the form of carbon black, coke, and/or graphite is added to the mixture.

11. Process in accordance with claim 10, providing that the carbon black component is added in an amount of up to 3 mass %.

12. Process in accordance with claims 10 or 11, providing that graphite in an amount of up to 20 mass % is added to the mixture.

13. Process in accordance with one of claims 1 to 12, providing that elementary sulfur in an amount of between 0.1 und 3 mass % is added to the mixture.

14. Process in accordance with one of claims 1 to 13, providing that the bitumen is added in two portions, and a very fine component (<100 microns) of the ceramic matrix material, the solid, carbon-containing component, and/or further additives are added between the additions of the first and second portions of bitumen.

15. Process in accordance with one of claims 1 to 14, providing that magnesite with a particle size of up to 6 mm is used as the ceramic matrix material.

16. Process in accordance with one of claims 1 to 15, providing that the mixture of refractory matrix material, synthetic resin, and bitumen, and, if desired, further additives, is subsequently processed into preforms.

17. Process in accordance with claim 16, providing that the preforms are subsequently heat-treated.

18. Process in accordance with claim 17, providing that the heat treatment is carried out at temperatures of between 300°C and 350°C.

## Revendications

1. Procédé de fabrication d'un matériau céramique réfractaire, à base de carbone, sans benzo(a)pyrène, comportant les étapes suivantes :
1.1. chauffage d'un matériau matrice céramique granuleux à une température comprise entre 170 et 300°C,
1.2 puis mélange, l'un après l'autre, de 0,1 à 5,0 % en poids, rapporté à la totalité du mélange, d'une résine synthétique pulvérulente et de 0,1 à 5,0 % en poids, rapporté à la totalité du mélange, d'un bitume chauffé à une température comprise entre 150 et 220°C, à l'état visqueux ou mélange global au matériau matrice céramique, sous forme d'un mélange, chauffé à une température comprise entre 150 et 220°C.

2. Procédé selon la revendication 1, caractérisé en ce que l'on utilise comme résine synthétique une résine phénolique.

3. Procédé selon la revendication 2, caractérisé en ce que l'on utilise comme résine phénolique une résiné novolaque.

4. Procédé selon l'une des revendications 1 à 3, caractérisé en ce que l'on utilise une résine synthétique ne contenant pas de durcisseur.

5. Procédé selon l'une des revendications 1 à 4, caractérisé en ce que la quantité de résine synthétique ajoutée par mélange est de 0,1 à 2,0 % en poids.

6. Procédé selon l'une des revendications 1 à 5, caractérisé en ce que la quantité de bitume ajoutée par mélange est de 2,0 à 3,0 % en poids.

7. Procédé selon l'une des revendications 1 à 6, caractérisé en ce qu'on utilise un bitume avec un dépôt de cokéfaction selon Conradsen,supérieur à 35 % en poids.

8. Procédé selon la revendication 7, caractérisé en ce qu'on utilise un bitume avec un dépôt de cokéfaction selon Conradsen, supérieur à 45 % en poids.

9. Procédé selon l'une des revendications 1 à 8, caractérisé en ce qu'après adjonction du bitume, on ajoute de façon homogène au mélange, un composant farineux ( < 100 µm) du matériau matrice céramique.

10. Procédé selon l'une des revendications 1 à 9, caractérisé en ce qu'on ajoute par mélange, au mélange, un composant solide à base de carbone, se présentant sous forme de suie, coke et/ou graphite.

11. Procédé selon la revendication 10, caractérisé en ce que le composant suie est ajouté en une quantité allant jusqu'à 3 % en poids.

12. Procédé selon la revendication 10 ou 11, caractérisé en ce qu'on ajoute par mélange, au mélange, du graphite en une quantité allant jusqu'à 20 % en poids.

13. Procédé selon l'une des revendications 1 à 12, caractérisé en ce qu'on ajoute par mélange, au mélange, du soufre à l'état élémentaire, en quantité comprise entre 0,1 et 3 % en poids.

14. Procédé selon l'une des revendications 1 à 13, caractérisé en ce que l'adjonction de bitume s'effectue en deux quantités partielles et un composant farineux (< 100 µm) du matériau matrice céramique, le composant solide à base de carbone et/ou d'autres additifs sont ajoutés par mélange entre l'adjonction de la première et de la deuxième quantité partielle.

15. Procédé selon l'une des revendications 1 à 14, caractérisé en ce que l'on utilise comme matériau matrice céramique de la magnésite dont la granulométrie va jusqu'à 6 mm.

16. Procédé selon l'une des revendications 1 à 14, dans lequel on traite ensuite le mélange composé du matériau matrice réfractaire, de la résine synthétique et du bitume, ainsi que, le cas échéant, d'autres additifs, pour produire des pièces de forme.

17. Procédé selon la revendication 16, caractérisé en ce que les pièces de forme sont ensuite soumises à un revenu.

18. Procédé selon la revendication 17, caractérisé en ce que le revenu est effectué à une température comprise entre 300 et 350°C.
